Europäisches Patentamt

European Patent Office

Office européen des brevets

(19)

(11) Numéro de publication : **0 387 122 B1**

(12) **FASCICULE DE BREVET EUROPEEN**

(45) Date de publication du fascicule du brevet :
**09.12.92 Bulletin 92/50**

(51) Int. Cl.⁵ : **F16J 15/44, F16J 15/30,**
**F16J 15/40, F01D 11/00**

(21) Numéro de dépôt : **90400499.1**

(22) Date de dépôt : **23.02.90**

(54) **Joint d'étanchéité d'arbre pour turbomachine.**

(30) Priorité : **08.03.89 FR 8903019**

(43) Date de publication de la demande :
**12.09.90 Bulletin 90/37**

(45) Mention de la délivrance du brevet :
**09.12.92 Bulletin 92/50**

(84) Etats contractants désignés :
**DE FR GB**

(56) Documents cités :
**EP-A- 0 110 804**
**FR-A- 602 709**
**FR-A- 2 120 656**
**US-A- 3 081 097**
**US-A- 3 575 424**
**US-A- 3 912 342**

(73) Titulaire : **SOCIETE NATIONALE D'ETUDE ET**
**DE CONSTRUCTION DE MOTEURS**
**D'AVIATION, "S.N.E.C.M.A."**
**2, Boulevard du Général Martial Valin**
**F-75015 Paris (FR)**

(72) Inventeur : **Gille, Laurent**
**31 avenue Charles Péguy**
**F-77000 Melun (FR)**
Inventeur : **Hebert, Michel, Jean, Henri**
**21, rue des Chasseurs**
**F-91800 Brunoy (FR)**

(74) Mandataire : **Moinat, François et al**
**S.N.E.C.M.A. Service des Brevets Boîte**
**Postale 81**
**F-91003 Evry Cédex (FR)**

# Description

La présente invention concerne un joint d'étanchéité intégré pour palier de turbomachine.

Il est fréquent dans un palier de turbomachine de disposer un arbre qui doit traverser une cloison de carter séparant deux enceintes dont l'une contient de l'air et de l'huile et l'autre contenant de l'air doit être maintenue exempte d'huile. Une étanchéité doit par conséquent être assurée dans cette traversée de cloison.

Plusieurs solutions ont été mises en oeuvre dans ce but. EP-A-0 110 804 décrit un exemple de réalisation comportant un joint d'étanchéité rotatif monté sur un arbre associé à un élément formant valve. FR-A-2 120 656 montre à la figure 2 le montage d'une bague segmentée en carbone sur un arbre au moyen d'un ressort circonférentiel et elle est placée dans une cage où elle est positionnée par rapport à une bague de retenue au moyen de ressorts, l'ensemble constituant un joint d'étanchéité. D'autres solutions prévoient de monter sur un arbre au niveau d'une traversée de cloison un boîtier équipé comportant une vrille de déshuilage coopérant avec la surface externe de l'arbre et une bague en graphite segmentée ou non directement montée et pré-assemblée sur le boîtier. Cette solution qui peut faciliter la mise en oeuvre présente toutefois l'inconvénient d'alourdir le dispositif et d'élever le coût.

La solution proposée par l'invention évite les divers inconvénients des solutions connues antérieures tout en assurant l'étanchéité de la traversée de cloison par un arbre tournant, notamment entre deux enceintes, l'une à air et l'autre à huile. Le palier de turbomachine ainsi équipé est caractérisé en ce que la cloison de carter de séparation des enceintes comporte une vrille de déshuilage, coopérant directement avec l'arbre et en ce que les segments de ladite bague segmentée sont solidarisés au moyen d'un anneau élastique logé dans une gorge périphérique desdits segments et comportant sur leur face opposée à la face en appui sur ledit carter des rainures axiales, d'une bague de retenue relié au carter par des moyens de verrouillage et comportant une rainure qui reçoit ledit anneau élastique et des excroissances axiales sur sa face qui coopère avec ladite bague en graphite et de ressorts disposés dans les logements formés par lesdites excroissances et placés en appui d'un côté sur la bague de retenue et de l'autre côté sur la face coopérante de la bague en graphite.

Avantageusement, les moyens de verrouillage de la bague de retenue sont constitués d'un pion anti-rotation disposé dans un logement ménagé sur le carter et d'un anneau d'arrêt à spirale intérieur logé dans une gorge du carter. La bague en graphite comporte en outre un ressort circonférentiel.

D'autres caractéristiques et avantages de l'invention seront mieux compris à la lecture de la description qui va suivre d'un mode de réalisation de l'invention, en référence au dessin annexé dont la figure unique représente, selon une vue en coupe par un plan passant par l'axe de rotation de l'arbre, une partie de palier de turbomachine comportant un joint intégré au carter conforme à l'invention.

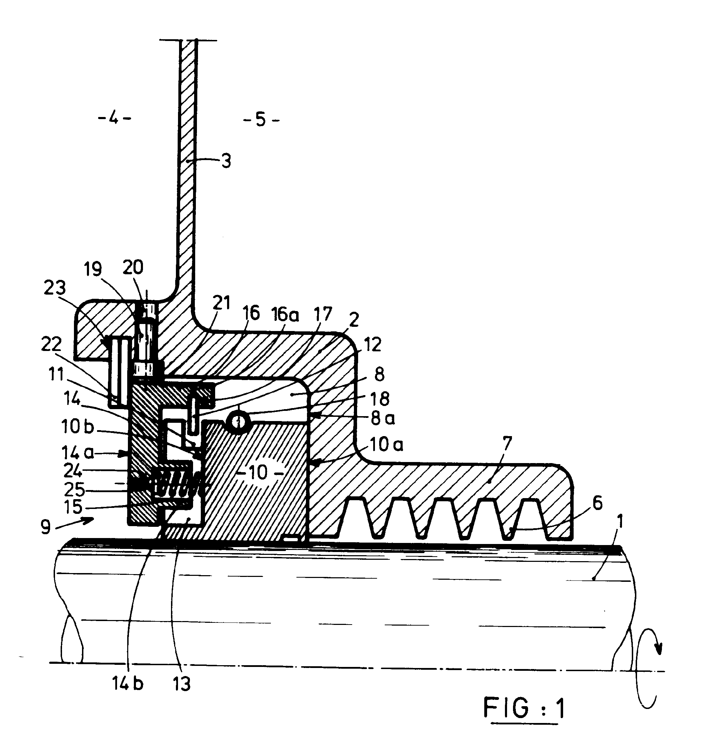

Dans un palier de turbomachine d'un type connu en soi, un arbre 1 est supporté en rotation par un palier dont seule une partie est représentée sur la figure 1. Un carter 2 comporte une cloison 3 qui ménage deux enceintes de palier, une enceinte 4 à air d'un côté de ladite cloison 3 et une enceinte 5 à huile de l'autre côté de la cloison. Ledit carter 2 comporte une vrille 6 de déshuilage ménagée sur une bride axiale 7 disposée en regard de la surface externe de l'arbre 1. A l'extrémité radialement interne de ladite cloison 3 de séparation des enceintes 4 et 5 est ménagé dans le carter 2 un logement annulaire 8 dans lequel est placé un joint d'étanchéité 9 intégré au carter 2. Ledit joint d'étanchéité 9 comporte une bague en graphite 10 segmentée dont une face 10a est en appui axial sur une face 8a duditlogement de carter. Les segments de ladite bague graphite 10 comportent une gorge périphérique 11 dans laquelle est placé un anneau élastique 12 coaxial qui assure la solidarisation des segments entre eux pour former la bague 10. La face 10b de la bague 10 opposée à ladite face 10a comporte également une rainure axiale 13. Ladite bague graphite 10 est supportée par une bague de retenue 14 du côté opposé à la face d'appui 8a sur le carter 2, au moyen d'une pluralité de ressorts 15 logés dans des excroissances cylindriques 14b prévus sur la face coopérante de ladite bague de retenue 14 et pénétrant dans lesdites rainures axiales 13 des segments de bague graphite. Ladite bague de retenue 14 comporte également sur son diamètre externe un rebord 16 axial dans lequel du côté radialement interne est ménagée une rainure 17 qui reçoit l'anneau élastique 12. La rigidité de la bague graphite 10 et l'appui sur la périphérie de l'arbre 1 sont assurés par un ressort circonférentiel 18 associé à ladite bague graphite 10. Les moyens de verrouillage de la bague de retenue 14 sur le carter 2 comportant un pion anti-tirotation 19 disposé dans un logement 20 ménagé sur le carter 2 et qui coopère avec une rainure 21 ménagée à la périphérie de ladite bague de retenue 14. Ces moyens comportent également un anneau d'arrêt 22 à spirales intérieur logé dans une gorge 23 ménagée dans le carter 2. Afin de faciliter le démontage, la face 14a de la bague de retenue 14 opposée à la bague graphite 10 comporte un trou 24 dans lequel est placé un rivet 25 de retenue du ressort 15.

La solution de joint d'étanchéité conforme à l'invention qui vient d'être décrite évite l'utilisation d'un boîtier pour monter les différents constituants mais permet toutefois de disposer d'un ensemble modulaire solidaire facile à manipuler. Le processus de montage utilisé est en effet le suivant :

- la bague graphite 10 équipée du ressort circonférentiel 18 est posée sur les ressorts 15 de façon que les excroissances 14b de la bague de retenue 14 pénètrent dans les rainures 13 de la bague graphite 10 ;

- on comprime l'anneau élastique 12 et on appui sur la bague graphite 10 de manière à mettre en place ledit anneau élastique 12 dans la rainure 17 de la bague de retenue 14, solidarisant ainsi l'ensemble constitué par la bague de retenue 14 et la bague graphite 10 segmentée ;

- le pion 19 est placé sur le carter 2 et l'ensemble précédemment obtenu est placé dans le logement 8 du carter 2, le pion 19 venant dans la rainure 21 de la bague de retenue 14 ;

- on dispose enfin l'anneau d'arrêt à spirales 22 en appui sur la face 14a de la bague de retenue 14 et dans la gorge 23 du carter 2.

De même, l'opération de démontage s'effectue simplement :

- l'anneau d'arrêt 22 est retiré,

- on enlève l'ensemble constitué par la bague de retenue 14, la bague graphite 10 avec le ressort circonférentiel 18, l'anneau élastique 12 et les ressorts 15.

Un démontage unitaire des segments de la bague graphite 10 peut ensuite être réalisé en repoussant l'anneau élastique 12 par des petits trous 16a ménagés sur le rebord 16 de la bague externe 14 de manière à désolidariser la bague de retenue 14 et la bague graphite 10 et après enlèvement du ressort circonférentiel 18.


## Revendications

1. Palier de turbomachine comportant un arbre (1) disposé à l'intérieur d'un carter (2), comportant une cloison (3) traversée par ledit arbre (1) et séparant une enceinte à air (4) et une enceinte à huile (5) et comportant un joint d'étanchéité (9) intégré audit carter (2) étant disposé entre l'arbre (1) et ladite cloison (3) dans un logement (8) ménagé dans ledit carter (2) et se composant d'une bague segmentée (10) en graphite, caractérisé en ce que ledit carter (2) comporte une bride axiale (7) portant une vrille de déshuilage (6) en regard de la surface externe dudit arbre (1) et en ce que les segments de ladite bague segmentée (10) sont solidarisés au moyen d'un anneau élastique (12) logé dans une gorge périphérique (11) desdits segments et comportant sur leur face opposée à la face (10a) en appui sur le carter (2) des rainures axiales (13), d'une bague de retenue (14) reliée au carter (2) par des moyens de verrouillage (19, 22) et comportant une rainure (17) qui reçoit ledit anneau élastique (12) et des excroissances axiales (14b) sur sa face qui coopère avec ladite bague en graphite (10) et de ressorts (15) disposés dans les logements formés par lesdites excroissances (14b) de bague et placés en appui d'un côté sur la bague de retenue (14) et de l'autre côté sur la face coopérante de la bague en graphite (10).

2. Palier de turbomachine selon la revendication 1 dans lequel les moyens de verrouillage de ladite bague de retenue (14) sont constitués d'un pion anti-rotation (19) disposé dans un logement (20) ménagé sur le carter (2) et d'un anneau d'arrêt à spirales intérieur (22) logé dans une gorge (23) du carter et en appui sur la face (14a) de la bague de retenue (14) opposée à la bague graphite (10).

3. Palier de turbomachine selon l'une quelconque des revendications 1 ou 2 dans lequel la bague graphite (10) comporte en outre un ressort circonférentiel (18).


## Patentansprüche

1. Turbomaschinenlager mit einer Welle (1), die im Innern eines Gehäuses (2) angeordnet ist, das eine von der Welle (1) durchdrungene Trennwand (3) besitzt, die eine Luftkammer (4) und eine Ölkammer (5) voneinander trennt, wobei in einer in dem Gehäuse (2) ausgebildeten Aufnahme (8) zwischen der Welle (1) und der Trennwand (3) eine in dem Gehäuse (2) integrierte Dichtung (9) angeordnet ist, die aus einem segmentierten Ring (10) aus Graphit besteht, **dadurch gekennzeichnet**, daß die Segmente des segmentierten Rings (10) durch einen elastischen Ring (12) fest zusammengehalten sind, der in einer umlaufenden Kehle (11) der genannten Segmente aufgenommen ist, die auf ihrer Seite, die der sich an dem Gehäuse (2) abstützenden Seite (10a) entgegengesetzt ist, radiale Nuten (13) für einen Haltering (14) aufweisen, der durch Verriegelungsmittel (19, 22) mit dem Gehäuse (2) verbunden ist und eine Nut (17) besitzt, die den genannten elastischen Ring (12) aufnimmt, und daß der Haltering (14) weiterhin auf seiner mit dem Ring (10) aus Graphit zusammenwirkenden Seite axiale Vorsprünge (14b) besitzt und Federn (15) aufweist, die in den durch die genannten Vorsprünge (14b) des Rings gebildeten Aufnahmeräumen angeordnet sind und sich mit einer Seite an dem Haltering (14) und mit der anderen Seite an der damit zusammenwirkenden Seite des Rings (10) aus Graphit abstützen.

2. Turbomaschinenlager nach Anspruch 1, bei dem die Verriegelungsmittel für den Haltering (14) aus einem Drehverhinderungsstift (19) bestehen, der in einer an dem Gehäuse (2) vorgesehenen Aufnahme (20) angeordnet ist, sowie aus einem Arretierungsring (22) mit inneren Spiralen, der in einer Kehle (23) des Gehäuses aufgenommen ist und sich an der dem Ring (10) aus Graphit entgegengesetzten Seite (14a) des Halterings (14) abstützt.

3. Turbomaschinenlager nach einem der Ansprüche 1 oder 2, bei dem der Ring (10) aus Graphit außerdem eine umlaufende Feder (18) aufweist.


**Claims**

1. Turbomachine bearing comprising a shaft (1) arranged within a casing (2), comprising a partition (3) traversed by the said shaft (1) and separating an air enclosure (4) and an oil enclosure (5) and comprising a sealing gasket (9) integrated with the said casing (2) being arranged between the shaft (1) and the said partition (3) in a housing (8) made in the said casing (2) and being composed of a segmented graphite ring (10), characterised in that the said casing (2) comprises an axial flange (7) carrying an labyrinth oil seed (6) facing the external surface of the said shaft (1) and in that the segments of the said segmented ring (10) are securely fastened by means of an elastic annulus (12) housed in a peripheral groove (11) of the said segments and comprising on their face opposite the face (10a) bearing on the casing (2) axial grooves (13), of a retaining ring (14) connected to the casing (2) by locking means (19, 22) and comprising a groove (17) which receives the said elastic annulus (12) and axial outgrowths (14b) on its face which interacts with the said graphite ring (10) and of springs (15) arranged in the housings formed by the said ring outgrowths (14b) and placed bearing on one side on the retaining ring (14) and on the other side on the interacting face of the graphite ring (10).

2. Turbomachine bearing according to Claim 1 in which the locking means of the said retaining ring (14) are composed of an anti-rotation peg (19) arranged in a housing (20) made in the casing (2) and a stop annulus with internal spirals (22) housed in a groove (23) of the casing and bearing upon the face (14a) of the retaining ring (14) opposite the graphite ring (10).

3. Turbomachine bearing according to either of Claims 1 or 2 in which the graphite ring (10) moreover comprises a circumferential spring (18).

FIG : 1